(19) **Europäisches Patentamt**

**European Patent Office**

**Office européen des brevets**

(11) Veröffentlichungsnummer: **0 514 640 B1**

(12) **EUROPÄISCHE PATENTSCHRIFT**

(45) Veröffentlichungstag der Patentschrift: **02.11.94**

(21) Anmeldenummer: **92104515.9**

(22) Anmeldetag: **16.03.92**

(51) Int. Cl.⁵: **C08J 7/04**, B29C 67/16, B29C 67/12

(54) Verfahren zum Beschichten eines faserverstärkten Kunststoffkörpers.

(30) Priorität: **22.05.91 DE 4116641**

(43) Veröffentlichungstag der Anmeldung:
**25.11.92 Patentblatt 92/48**

(45) Bekanntmachung des Hinweises auf die Patenterteilung:
**02.11.94 Patentblatt 94/44**

(84) Benannte Vertragsstaaten:
**AT BE CH DE DK ES FR GB IT LI LU NL SE**

(56) Entgegenhaltungen:
**EP-A- 0 363 103**
**DE-A- 4 014 623**

**PATENT ABSTRACTS OF JAPAN vol. 11, no. 158 (M-591)22. Mai 1987**

**PATENT ABSTRACTS OF JAPAN vol. 8, no. 64 (M-285)27. März 1984**

(73) Patentinhaber: **SIGRI GREAT LAKES CARBON GmbH**
**Rheingaustrasse 182**
**D-65203 Wiesbaden (DE)**

(72) Erfinder: **Habenicht, Hinrich, Dipl.-Ing.**
**Ouellenstrasse 8**
**W-8906 Gersthofen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Aufbringen eines festhaftenden widerstandsfähigen Belages auf aus einem Verbundwerkstoff aus verstärkenden Fasern und einer Kunststoffmatrix bestehende Körper durch ein thermisches Spritzverfahren.

Durch Verwendung von faserverstärkten Kunststoffen können im Maschinen-, Fahrzeug- und Anlagenbau sowie in der Bauindustrie erhebliche Vorteile erzielt werden. Faserverstärkte Kunststoffe sind bei guter Korrosionsbeständigkeit im allgemeinen leichter als Metalle und haben bei entsprechender Auslegung mindestens gleich gute gewichtsbezogene mechanische Eigenschaften. Diese Vorteile fallen bei schnell bewegten Teilen wie z.B. Wellen, Walzen, Rollen, Stößeln, Hebeln oder Propellern etc. besonders ins Gewicht.

Aus Metallen bestehende, schnelldrehende Walzen, z.B. für Papier-, Folienherstellungs- und -Verarbeitungs- oder Druckmaschinen sind wegen ihrer großen Masse erheblichen Fliehkräften ausgesetzt, die Trägheits- und damit die Antriebskräfte sind vergleichsweise groß und an den Massenausgleich werden hohe Anforderungen gestellt. Man verwendet deshalb heute für diesen Zweck Walzen aus faserverstärktem Kunststoff, insbesondere aus kohlenstoffaserverstärktem Kunststoff, die bei gleicher Steifigkeit und verbesserter Formbeständigkeit eine wesentlich kleinere Masse als Walzen aus Metall haben (DE-GM 83 22 639).

Auch im Anlagen- und Behälterbau sowie in der Bauindustrie ist es vorteilhaft, sich der hohen Zug- und Biegefestigkeit, der ausgezeichneten Torsionssteifigkeit sowie der Korrosionsbeständigkeit der im Vergleich zu Metallen oder keramischen Werkstoffen leichteren faserverstärkten Kunststoffe zu bedienen.

Beim Einsatz für Förder- oder Transportvorgänge bzw. bei der Beaufschlagung mit relativ zu Oberflächen bewegten Stoffen erweisen sich die Oberflächen von faserverstärkten Kunststoffen jedoch häufig als zu wenig widerstandsfähig. Es ist deshalb vorgeschlagen worden, die Oberflächen zur Verminderung von Abrasionserscheinungen und der Vermeidung von Produktverunreinigungen durch galvanisches Auftragen mit einem widerstandsfähigen Metall zu beschichten (DE-GM 84 06 019). Die Qualität so aufgebrachter Schichten befriedigt indessen in vielen Fällen wegen zu geringer Haftfestigkeit nicht. Ein anderes Verfahren zur Erzeugung von Oberflächenschichten auf Kunstharzkörpern bedient sich der elektrostatischen Abscheidung (EP-A-0 363 103). Dabei werden Kunstharzkörper hergestellt, die als Füller elektrisch leitfähige Partikel in Faser-, Schuppen- oder Teilchenform enthalten. Deren zu beschichtende Oberflächen werden dann durch physikalische oder chemische Verfahren soweit aufgerauht, daß sie hinreichend elektrisch leitend werden und als Rezeptoroberflächen für ein elektrostatisches Beschichtungsverfahren dienen können. Auf diese Weise werden insbesondere lackartige Beschichtungen aufgetragen. Über die Abrasionsfestigkeit derartiger Schichten wird an dieser Stelle nicht berichtet. Nach einem anderen Verfahren (GB 887,366) werden Formkörper aus härtbaren Kunststoffen wie Formaldehydharzen durch Flammspritzen mit Überzügen aus Metallen oder Legierungen versehen, die diese Teile gegen Stoß- und Schlagbeanspruchungen widerstandsfähig machen sollen. Dieses Verfahren ist nach heutigem Stand der Technik umständlich und aufwendig, die Haftfestigkeit der Schichten genügt besonders bei dynamischer Beanspruchung heutigen Anforderungen nicht und die Wahl der Materialien, die aufgespritzt und kombiniert werden können, ist beschränkt. Um genügend festhaftende Schichten zu erhalten, müssen nämlich spezielle Bedingungen eingehalten werden. Das Material für die erste Schicht ist nicht frei wählbar. Sein Schmelzpunkt muß 400 °C über dem Zersetzungspunkt des Kunststoffs liegen und sein thermischer Ausdehnungskoeffizient muß größer als der des Kunststoffs sein. Außerdem ist es Bedingung, daß das Material, aus dem die zweite Schicht aufgebaut werden soll, einen kleineren Ausdehnungskoeffizienten hat, als die zuvor aufgebrachte erste Schicht, was schon auf eine schlechte Haftung der ersten Schicht auf ihrer Unterlage schließen läßt. Die zu beschichtenden Kunststoffteile können Füllstoffe wie Kokspulver, Graphit, Holzmehl, Gesteinsmehl, Quarzpulver, Papier- oder Textilschnitzel enthalten, die möglicherweise zur Erniedrigung des thermischen Ausdehnungskoeffizienten dienen sollen. Eine Mitwirkung dieser Füller bei der Verankerung der aufgespritzten Metalle auf der Kunststoffoberfläche ist in der Literaturstelle nicht angedeutet und wegen der stofflichen Unterschiede zwischen den Füller- und den Schichtmaterialien nicht möglich.

Mit dem Aufbringen von Schutzschichten auf aus Kunstharz, Füllstoffen und/oder Fasern hergestellten Kunststoffteilen durch Flammspritzen befaßt sich auch die schweizerische Patentschrift 538 549. Danach können zwar nach dem Flammspritzverfahren Schutzschichten aufgebracht werden, aber diese Schichten haben eine ungenügende Haftfestigkeit oder es treten verfahrensbedingt irreparable Beschädigungen der Oberfläche des Trägerwerkstoffes, insbesondere der verstärkenden Fasern auf. Zur Lösung der Probleme wird deshalb auf den faserverstärkten Grundkörper erst eine Zwischenschicht aus einem Gewebe oder Geflecht und einem Kunstharz aufgebracht, die als Haftgrund und Puffer beim Flammspritzen dient. Die aufgespritzten Teilchen dringen zwischen die einzelnen Gewebeporen ein und erzielen damit eine tiefe Verankerung. Auch dieses Verfahren ist technisch nicht befriedigend und zudem aufwendig, weil die Herstellung der Zwischenschicht nur mit Stoffen möglich ist, die in Gewebe- oder Geflechtform zugänglich sind, die Verarbeitung von Geweben und Geflechten teurer Handarbeit oder spezieller technischer Einrichtungen bedarf und die Gewebe oder Geflechte der Oberfläche des Grundkörpers genau angepaßt werden müssen, was insbesondere bei in sich geschlossenen Oberflächen wegen des Auftretens von Stößen oder Überlappungen problematisch ist. Diese gewebehaltige Schicht dient beim Flammspritzen als thermische Barriere. Sie unterliegt deshalb hohen inneren, durch Unterschiede in den thermischen Ausdehnungskoeffizienten zwischen Kunstharzmatrix und Gewebematerial bedingten Spannungen, die bei einigermaßen gut haftender aufgespritzter äußerer Schicht zu inneren Defekten und Delaminierungen im Unterkörper führen können. Aber auch die Haftung der aufgespritzten Schicht läßt trotz Verbesserungen gegenüber dem Stand der Technik zu wünschen übrig, da beim Flammspritzen die heißen Teilchen in allen Fällen zunächst auf einer Oberfläche aus Kunstharz auftreffen, das sich dabei mehr oder weniger zersetzt und wie Versuche inzwischen gezeigt haben, eine direkte chemische Verbindung des Spritzguts mit entsprechend ausgewähltem Gewebe- oder Geflechtmaterial verhindert.

In der Patentschrift DE 35 27 912 ist ein anderes Verfahren zum Beschichten von kohlenstoffaserverstärkten Kunststoffkörpern mit Metallen beschrieben. Eine gute Haftung der Schutzschicht wird hier durch Anwendung des Plasmaspritzverfahrens in Verbindung mit einer C-faserverstärkten Substratoberfläche auf Basis Phenolformaldehydharz erzielt. Dieses Verfahren hat zwar Eingang in die industrielle Praxis gefunden, die Haltbarkeit von nach diesem Verfahren hergestellten Schichten befriedigt jedoch auch nicht vollständig. Bei starken mechanischen Belastungen wie beim Zuschneiden, beim Schleifen auf Endmaß, unter stoßartiger Belastung oder auch langer betrieblicher Beanspruchung treten noch immer Delaminierungen der Beschichtung auf.

Der Erfindung lag deshalb die Aufgabe zugrunde, ein Verfahren zum Aufbringen eines festhaftenden, widerstandsfähigen Belages auf aus einem Verbundwerkstoff aus verstärkenden Fasern und einer Kunststoffmatrix bestehende Körper durch ein thermisches Spritzverfahren zu schaffen, bei dem die Wahl des verwendeten Matrixkunstharzes und die Wahl der für eine Beschichtung infrage kommenden Stoffe keinen Einschränkungen unterliegt, die Herstellung eines beschichtungsfähigen sowie eines beschichteten Verbundkörpers einfach und wenig aufwendig ist und Schichten mit wesentlich verbesserter Haftfestigkeit herstellbar sind.

Die Aufgabe wird dadurch gelöst, daß die zu beschichtende Oberfläche aus einem Kunstharz besteht, in das ein Anteil eines Materials in Teilchenform eingebunden ist, das stofflich dem Material entspricht, das als Beschichtungsmaterial dient oder das sich mit dem als Beschichtungsmaterial dienenden Material chemisch zu verbinden imstande ist, daß die äußeren Teile der zu beschichtenden Oberfläche soweit und in einer Weise abgetragen werden, daß die in die Oberfläche eingebundenen, stofflich dem Beschichtungsmaterial gleichen oder entsprechenden Teilchen in Richtung der späteren Beschichtung zeigende, freiliegende, saubere, kunstharzfreie Oberflächen haben und daß das Material für die Erzeugung mindestens der ersten Schicht des Belages auf diese Oberfläche mittels eines thermischen Spritzverfahrens aufgespritzt wird. Weitere Ausgestaltungen der erfinderischen Lösung finden sich in den vom Anspruch 1 abhängigen Ansprüchen.

Wesentlich für die Erfindung sind folgende, zusammenwirkende Faktoren:

1. Ein Grundkörper aus faserverstärktem Kunststoff ist mit einer ein teilchenförmiges Material enthaltenden Kunstharzschicht verbunden. Das für diese Schicht verwendete Kunstharz hat einerseits eine gute Haftung auf oder in der Harzmatrix des Grundkörpers und andererseits ein gutes Einbindungsvermögen für die körnigen bis pulverigen Materialien.

2. Die Oberfläche der teilchenhaltigen Schicht wird im ausgehärteten Zustand soweit abgetragen, daß die zunächst herstellungsbedingt mit einer Kunstharzschicht überzogenen Teilchen freiliegende, nach außen weisende, saubere Oberflächen erhalten, aber andererseits weiterhin fest in der Kunstharzmatrix verankert bleiben.

3. Die auf diese Oberfläche mit Hilfe eines thermischen Spritzverfahrens aufgebrachte erste Schicht findet ihre Verankerung an und in den freigelegten Oberflächenanteilen der Teilchen, die auf ihren nicht freigelegten Seiten fest in die Kunstharzmatrix der Zwischenschicht eingebunden sind. Diese Verankerung wird durch eine chemische Bindung der aufgespritzten Teilchen mit den in die Harzmatrix eingebetteten Teilchen der Unterlage bewirkt. Wesentlich für eine befriedigende Ausbildung einer solchen Bindung ist das Fehlen einer die Teilchenoberflächen abdeckenden Kunstharzhaut. Versuche haben ergeben, daß die Haftung der thermisch aufgespritzten Schicht drastisch verschlechtert ist, wenn die heißen Partikel erst eine Kunstharzhaut durchschlagen müssen, ehe sie die Oberflächen der in der Kunstharzschicht verankerten Teilchen erreichen oder wenn sie gar nur mechanischen Halt in der Kunstharzschicht bekommen. Einer Haftung hinderlich sind auch Produkte der thermischen Zersetzung, die beim Aufprall der heißen geschmolzenen Beschichtungspartikel auf eine Kunstharzoberfläche entste-

3

hen. Im Gegensatz zu allen bisher bekannten Verfahren ist bei dem erfindungsgemäßen Verfahren eine Verankerung der thermisch aufgespritzten Schicht in der Kunstharzunterlage nicht mehr notwendig.

Der Grundkörper aus faserverstärktem Kunststoff kann jede für die Anwendung eines thermischen Spritzverfahrens geeignete Form haben. Besonders geeignet sind einerseits ebene oder gebogene flächige Gebilde wie Platten, Schalen, Behälter oder Rohrleitungen oder Segmente davon oder andererseits Körper mit mindestens teilweise in sich geschlossenen Oberflächen wie Rohre, Rollen, Walzen, Kegel oder Kegelstümpfe.

Grundmaterial und Matrixwerkstoff für die verstärkenden Fasern können alle Kunstharze sein, aus denen Körper der oben beschriebenen Gestalt mit ausreichender Form- und Temperaturstabilität hergestellt werden können. Insbesondere sind dies die duroplastischen Harze wie Phenolformaldehyd-, Epoxid- oder Polyesterharze. Es sind aber auch thermoplastische Harze wie z.B. Polypropylen, Polyamide oder Polycarbonate geeignet. Als verstärkende Fasern werden vor allem Kohlenstoffasern, wobei unter diesem Begriff Graphitfasern eingeschlossen sein sollen, Glasfasern und Aramidfasern verwendet. Wo es sinnvoll ist, können auch andere Fasern, z.B. Mineralfasern wie Basaltfasern oder Steinwolle, Metallfasern und carbidische Fasern wie SiC-Whisker eingesetzt werden. Die Fasern können als Kurzschnitt- oder Stapelfasern in Form von Geweben, Geflechten, Gewirken oder anderen textilen Gebilden zwei oder dreidimensionaler Art oder als Endlosfasern in den Kunstharzkörper eingebunden sein.

Zur Haftvermittlung für die thermisch aufzuspritzende Schicht dienen Teilchen, die in eine auf die äußere Oberfläche des faserverstärkten Grundkörpers aufgebrachte und mit dieser Oberfläche fest verbundenen Schicht eingebunden sind.

Für die Durchführung des Verfahrens wird vorteilhafter Weise eine Mischung aus einem Kunstharz, das sich mit dem Grundkörper aus faserverstärktem Kunstharz gut verbinden kann und der Teilchenkomponente hergestellt. Das dazu ausgewählte Kunstharz kann das gleiche wie das des Grundkörpers oder ein anderes sein, das den Bedingungen einer guten Verbindung zum Grundkörper, einer guten Einbindung der Teilchen und einer guten Bearbeitbarkeit nach dem Aushärten gleichermaßen entspricht. Diese Kunstharz-Teilchen-Mischung wird in dünner Schicht auf die Oberfläche des faserverstärkten Kunstharzkörpers aufgebracht. Man kann sich dazu aller Verfahren bedienen, die dazu geeignet sind. Das Auftragen kann mit einer Spachtel von Hand, maschinell mit einem Rakel, durch ein Spritzverfahren oder nach einem "inversen Verfahren" durch Aufblasen eines Körpers, speziell einer Walze oder eines Rohres, gegen eine entsprechend ausgebildete Form, deren Innenwand mit einer Kunstharz-Teilchenschicht versehen worden ist, Aushärten des Kunstharzes und nachfolgendes Entformen geschehen. Nach einer anderen Variante eines derartigen "inversen Verfahrens" wird ein Kunstharz verwendet, das bei Temperaturbehandlung und/oder beim Aushärten expandiert, wobei die Teilchen sowohl im expandierbaren Kunstharz oder in einer auf die Innenwand der umgebenden Form aufgebrachten Kunstharzschicht enthalten sein können. Für Beschichtungen, die keinen hohen Ansprüchen genügen müssen, können die Teilchen auch auf eine Kunstharzschicht aufgestreut oder als Pulver aufgespritzt und falls notwendig eingedrückt werden. Nach ihrer Herstellung wird die teilchenhaltige Schicht nach bekannten Verfahren ausgehärtet.

Wenn an die Maßhaltigkeit des fertig beschichteten Körpers hohe Anforderungen gestellt werden, ist es vorteilhaft, bereits dem faserverstärkten Grundkörper eine in entsprechenden Toleranzen vorbearbeitete Oberfläche zu geben. Dies kann je nach Anwendungsfall durch Schleifen oder ein spanabhebendes Verfahren geschehen. Um nach dem Aufbringen der teilchenhaltigen Kunstharzschicht und dem Aushärten dieser Schicht wiederum eine glatte, nicht deformierte Oberfläche zu erhalten, werden die mit der teilchenhaltigen Harzschicht versehenen Körper mit einer Abdeckfolie belegt, die nach dem Aushärten wieder entfernt wird. Zylinderförmige Körper werden dazu mit einem Deckband wie es dem Fachmann bekannt ist, umwickelt. Die auf dem faserhaltigen Grundkörper befindliche, die Haftung der thermisch aufgespritzten Schicht vermittelnde Teilchen enthaltende Schicht hat eine Dicke von mindestens 50 $\mu$m und höchstens 4000 $\mu$m. Dünnere Schichten lassen einen ausreichenden thermischen Ausgleich beim thermischen Spritzen nicht zu und ergeben eine schlechtere Haftung der Schichten, dickere Schichten sind wegen des steigenden Materialverbrauchs, des damit verbundenen Gewichtszuwachses des gesamten Körpers und wegen der Schwierigkeit, das Coating maßhaltig aufzubringen, ungünstig. Die Teilchen, die als Haftvermittler wirken, werden in Form von Pulvern oder Körnungen in das Kunstharz eingebracht. Ihre Menge liegt je nach Anforderungen zwischen 5 und 60 Volumenprozent bezogen auf die Kunstharz/Teilchenmischung. Die Teilchenform kann je nach stofflicher Herkunft und Herstellungsverfahren verschieden sein. Die meisten angewendeten Formen sind im wesentlichen isometrisch, plättchen- oder stäbchenförmig wobei eckige, rauhe oder gezackte Teilchenoberflächen eine feste Verankerung begünstigen und deshalb bevorzugt werden. Die Teilchengröße beträgt mindestens 10 $\mu$m und höchstens 1000 $\mu$m.

Bezüglich der stofflichen Zusammensetzung entsprechen die die Haftung vermittelnden Teilchen den Materialien, aus denen die thermisch aufgespritzten Schichten bestehen. Es können metallische Werkstoffe wie Nickel, Chrom, Vanadium, Mangan, Eisen, Kobalt, Titan, Silicium, Legierungen dieser Metalle oder Aluminium bzw. dessen Legierungen oder Kupfer und dessen Legierungen oder auch nichtmetallische Stoffe wie Siliciumdioxid, Gläser, Aluminiumoxid, Titandioxid, Zirkondioxid oder Si-SiC sein. Bei der Konzeption der gesamten Beschichtung wird von den Anforderungen an die thermisch aufgespritzte Schicht ausgehend, ein Material ausgewählt, das eine gute Bindung mit dem Material der thermisch aufgespritzten Schicht ergibt und das in Teilchenform gut in der Harzmatrix verankert werden kann. Dabei ist es nicht Bedingung, daß die im Kunstharz verankerten Teilchen aus dem gleichen Material bestehen, wie die thermisch aufgespritzte Schicht.

Nach dem Aufbau der ausgehärteten, die Teilchen enthaltenden Schicht ist es für den weiteren Erfolg des erfindungsgemäßen Verfahrens zwingend erforderlich, daß eine gute chemische Bindung zwischen der thermisch aufgespritzten Schicht und den die Haftung dieser Schicht auf den faserverstärkten Körper vermittelnden Teilchen erreicht wird. Voraussetzung dafür ist das Entfernen der die Teilchen zunächst bedeckenden Kunstharzhaut. Dies geschieht durch mechanischen Abtrag oder durch chemische Löse- oder Ätzverfahren. Als mechanische Verfahren sind neben den spanabhebenden Verfahren vor allem Schleifen oder Sand- bzw. Pulverstrahlen vorteilhaft. Die dabei erhaltenen, relativ glatten Teilchenoberflächen können danach z.B. durch chemisches Ätzen mit Säuren oder Laugen aufgerauht werden, ohne die glatte Kunstharzoberfläche des Körpers zu verletzen. Unter dem Begriff "chemische Bindung" werden im Sinne der Erfindung alle Arten der chemischen Bindungen wie ionogene, kovalente, metallische oder koordinative Bindungen verstanden.

Wenn maßhaltige, beschichtete Teile wie z.B. Walzen für die Druckindustrie hergestellt werden sollen, ist es vorteilhaft, die Oberfläche des Walzenrohlings nach dem Aufbringen der teilchenhaltigen Schicht und vor dem thermischen Beschichten bereits auf Maß und auf eine glatte Oberfläche zuzuschleifen. Die danach thermisch aufgespritzten und evtl. zusätzlich aufgebrachten Schichten haben dann einen gleichmäßigeren Schichtaufbau, eine gleichmäßigere Schichtdicke und sie lassen sich mit geringerem Aufwand auf die geforderten Maße und die geforderte Oberflächengüte bringen.

Auf den wie im vorstehenden beschrieben vorbereiteten faserverstärkten Kunstharzkörper, der außen eine teilchenhaltige Zone aufweist, wird mittels eines der bekannten thermischen Spritzverfahren mindestens eine Schicht aufgespritzt. Als Auftragsverfahren kommen vor allem das Flammspritzen und das Plasmaspritzen unter Einschluß der Variante des Vakuumplasmaspritzens in Frage.

Als Spritzgut können alle Stoffe, die im vorstehenden als Einlagerungsmaterial in Teilchenform für die Kunstharzzwischenschicht aufgeführt worden sind, verwendet werden. Die Auswahl des jeweils eingesetzten Stoffes richtet sich nach dem vorgegebenen Verwendungszweck. Durch den Verwendungszweck ist auch die Oberflächenstruktur des Körpers festgelegt. Für Zwecke in der Bauindustrie oder im Abrasionsschutz kann häufig der beschichtete Körper ohne weitere Oberflächenbehandlung eingesetzt werden. Anwendungen im Maschinenbau wie z.B. als Druck-, Farbauftrags-, Umlenk- oder Transportwalzen bei der Papier- oder Folienherstellung oder -Verarbeitung erfordern eine nachfolgende Bearbeitung durch spanabhebende Bearbeitungsverfahren, durch Schleifen, Polieren oder Läppen, um die notwendige Genauigkeit und Rauhtiefe zu erzielen.

Für manche Einsatzzwecke ist es erforderlich, Körper mit einem mehrschichtigen Belag auf dem kunstharzhaltigen Grundkörper herzustellen. Dies kann z.B. der Fall sein, wenn außen eine duktile Oberfläche gefordert wird, die sich auf einer harten, zähen Unterlage abstützt oder verallgemeinert, wenn die aufgebrachte Grundschicht allein dem vorgesehenen Verwendungszweck nicht genügt und durch das Aufbringen weiterer Schichten erst die geforderten Eigenschaften der Beschichtung bezüglich Härte, Rauhigkeit, Haftfähigkeit, Porosität, elektrischer Leitfähigkeit, Oberflächenstruktur etc. erreicht werden können. In diesen Fällen ist es möglich, auf die erste thermisch aufgespritzte Schicht nach an sich bekannten und in der Praxis erprobten Verfahren weitere Schichten aufzutragen. Dies kann durch Fortsetzen des Auftrags mit thermischen Spritzverfahren oder, falls die Grundschicht elektrisch leitend ist, auch auf galvanischem Wege geschehen. Auf diese Weise können mehrere Schichten übereinander aufgebracht werden, wobei das verwendete Auftragsverfahren von Schicht zu Schicht gewechselt werden kann. Die schichtweise übereinander aufgebrachten Materialien gehören in der Regel unterschiedlichen Stoffen an. Sie können aber auch stofflich gleich sein.

Wie zu erkennen ist, ist das erfindungsgemäße Verfahren sehr variabel und läßt auf einfachem Wege eine Anpassung an eine Vielzahl von technischen Problemstellungen zu. Im einzelnen ergeben sich folgende Vorteile. Es ist nunmehr möglich, auf einfachem Wege auf mit Fasern verstärkten Kunstharzkörpern durch ein thermisches Spritzverfahren Oberflächenbeschichtungen mit gegenüber dem Stand der Technik erheblich verbesserter Haftfestigkeit und mechanischer Stabilität zu schaffen. Die früher existenten Haftungsprobleme zwischen der thermisch aufgespritzten Schicht und dem faserverstärkten Kunstharzkörper, die

1. aus der Wirkung stark unterschiedlicher thermischer Ausdehnungskoeffizienten zwischen dem faserverstärkten Kunstharzkörper und dem thermisch aufgespritzten Beschichtungsmaterial und

2. aus der Bildung von Zersetzungsprodukten des Kunstharzes während des thermischen Spritzens sowie

3. aus dem Entstehen eben solcher Zersetzungsprodukte beim thermischen Spritzen oder/und dem Vorhandensein einer Kunstharzzwischenschicht zwischen zusätzlich auf den faserverstärkten Kunstharzkörper aufgebrachten Schichten, die eine bessere Haftung der aufgespritzten Schichten bewirken sollten und der thermisch aufgespritzten Schicht

herrührten, sind für das thermische Aufspritzen der Schichten und für die Beanspruchung dieser Schichten im laufenden Betrieb praktisch bedeutungslos geworden. Die Unempfindlichkeit und die gute Haftfähigkeit der Beschichtung erkennt man daran, daß nach dem erfindungsgemäßen Verfahren beschichtete Körper ohne Abplatzen von Teilen der Schicht mit mechanischen Trennwerkzeugen geschnitten werden können und daß die Beschichtung Schlagbeanspruchungen beim Hantieren und im Betrieb ohne Beschädigungen gewachsen ist. Das Aufbringen und Präparieren der verfahrensnotwendigen, die verbesserte Haftfähigkeit bedingenden Schicht auf dem faserverstärkten Grundkörper kann nach einfachen, auch maschinell und damit rationell ausführbaren Verfahren geschehen. Eine Schädigung außenliegender Verstärkungsfasern durch auftreffende Partikel beim thermischen Spritzen kann ausgeschlossen werden. Der Anwender des Verfahrens ist in der Wahl der Harzmatrices für die Verstärkungsfasern und der Materialien für die aufzubringenden Schichten in weiten Grenzen frei.

Die Erfindung wird durch die folgenden Ausführungsbeispiele erläutert. Sie ist jedoch nicht auf die Ausführungsformen der Beispiele beschränkt.

1. Eine 2000 mm lange hohlzylindrische Walze mit einem Innendurchmesser von 90 mm aus mit Kohlenstoffendlosfasern verstärktem Phenolformaldehydharz, die durch Aufwickeln eines mit Phenolformaldehydharz getränkten Kohlenstoffadens auf einen zylinderförmigen Dorn in einer Vielzahl von Lagen, Aushärten des Harzes und Entformen hergestellt worden war, wurde auf einer Drehbank auf das Durchmesseraußenmaß von 100 mm zugeschliffen. Die so vorbereitete Walze wurde zum Beschichten mit einer mit einem Metallpulver gefüllten Kunstharzschicht auf eine numerisch gesteuerte Wickelmaschine gespannt und ihre äußere Oberfläche mit Aceton entfettet. Die Masse für das Beschichten bestand aus einer Mischung aus Phenolformaldehydharz (Bakelite DW 247), mit einer Viskosität von 500 bis 1000 mPa • s, in das wasserverdüstes Stahlpulver (Typ 316 L), rostfrei, Korngröße ≤ 75 $\mu$m im Volumenverhältnis 45 % Stahlpulver zu 55 % Phenolformaldehydharz eingemischt worden war. Zum Beschichten wurde die Walze mit einer Geschwindigkeit von 30 m • min$^{-1}$ rotiert und die Beschichtungsmischung mit einer flexiblen Spachtel in einer Dicke von ca. 1 mm aufgezogen. Anschließend wurde der beschichtete Körper mit einem Abreißgewebe umwickelt und in einem Umlufttrockenschrank mit folgendem Härtezyklus ausgehärtet:

Aufheizen auf 90 °C, 1 Stunde,

Haltezeit bei 90 °C, 24 Stunden,

Aufheizen von 90 °C auf 130 °C, 1 Stunde,

Haltezeit bei 130 °C, 2 Stunden,

Abkühlen auf Raumtemperatur ohne aktives Kühlen.

Die Walze mit der ausgehärteten Oberflächenschicht wurde auf einer Schleifmaschine mit Diamantscheibe auf einen Durchmesser von 100,8 mm und eine Rauhtiefe von 10 bis 15 $\mu$m abgeschliffen und ihre äußere Oberfläche durch Abblasen mit ölnebelfreier Preßluft entstaubt. Auf die so vorbereitete Mantelfläche der Walze wurde durch Plasmaspritzen unter Anwendung von auf diesem Gebiet der Technik üblichen Bedingungen eine Schicht aus Nickel/Chrom-Legierung (80 Gew.-% Nickel, 20 Gew.-% Chrom) aufgebracht. Nach der Spritzbehandlung wurden die Spitzen und Grate der aufgebrachten Beschichtung durch Bürsten mit einer Drahtbürste abgetragen und eine glatte Oberfläche erhalten.

2. Auf einer Wickelmaschine wurde auf einen Dorn von 90 mm Durchmesser ein durch ein Bad eines Epoxidharzes (Bakelite, L 20), Viskosität 800 bis 1000 mPa • s, geleitetes Kohlenstoffasergroßkabel aus 40 000 Filamenten bis zu einer Schichtstärke von ca. 9,5 mm gewickelt. Der Wickelkörper hatte eine Länge von 1 500 mm. Für das Einbringen der metallhaltigen Haftvermittlerschicht in die äußeren Lagen des Wickelkörpers wurde mit einem Kohlenstoffaserkabel aus 12 000 Filamenten weitergearbeitet. Dieses wurde durch ein Bad geleitet, das aus einer Suspension aus dem gleichen Epoxidharz wie oben (Bakelite, L 20) mit einem Gehalt von 50 Gew.-% ≙ 15 Vol.-% eines Legierungspulvers, Korngröße 60 % ≤ 70 $\mu$m, Zusammensetzung 89 Gew.-% Nickel, 5 Gew.-% Molybdän, 6 Gew.-% Aluminium bestand und nach dem Durchlaufen des Bades bis zum Erreichen einer Wandstärke von ca. 10,1 mm auf den Zylinder aufgewickelt. Durch die Fadenspannung beim Aufwickeln wurde ein beträchtlicher Teil der Mischung aus Expoxidharz und dem Legierungspulver aus den auf diese Weise aufgebrachten Wickellagen in die äußerste Oberflächenschicht gepreßt, so daß dort eine dünne, faserfreie Kunstharz/Legierungspulverschicht entstand. Die Oberfläche des Wickelkörpers wurde mit einer Trennfolie umwickelt und in einem Umlauftrockenschrank mit folgendem Härtezyklus ausgehärtet:

Aufheizen auf 90 °C, 1 Stunde;

Haltezeit bei 90 °C, 10 Stunden;

Aufheizen von 90 °C auf 130 °C, 1 Stunde;

Haltezeit bei 130 °C, 2 Stunden.

Die so erhaltene Walze wurde sodann auf einer Drehbank mit einer Diamantschleifscheibe auf ein Endmaß von 10,0 mm abgeschliffen. Nach dem Schleifen wurde die Walze zum Beschichten nach dem Flammspritzververfahren in eine motorgetriebene Dreheinrichtung eingespannt, die ein Rotieren um die Längsachse der Walze ermöglichte. Vor Beginn des Spritzvorganges wurde die Oberfläche der Walze von anhaftenden Staubpartikeln mittels ölnebelfreier Preßluft gereinigt. Danach wurde die Mantelfläche der Walze mit einer 100 $\mu$m starken Schicht aus einer Legierung der Zusammensetzung 78 Gew.-% Nickel, 15 Gew.-% Chrom, 7 Gew.-% Eisen nach dem Flammspritzverfahren unter in diesem Zweig der Technik üblichen Bedingungen beschichtet. Nach dem Beschichten wurde die Walzenoberfläche mittels Stahlbürste durch Abtragen der Spitzen geglättet.

3. Auf eine mit Glasfasern (mittlere Länge 20 mm) verstärkte Platte (Breite 30 cm, Länge 50 cm, Dicke 0,2 cm) aus Phenolformaldehydharz, deren Oberfläche mit ölnebelfreier Preßluft staubfrei gemacht worden war, wurde mit einer Spachtel eine Mischung aus Phenolformaldehydharz (Bakelite DW 247, Viskosität 500 bis 1000 mPa • s) mit einem Legierungspulver (Körnung 100 bis 200 $\mu$m, Zusammensetzung: Nickel 80 Gew.-%, Chrom 20 Gew.-%) im Volumenverhältnis 55 % Legierungspulver, 45 % Phenolformaldehydharz in einer Schichtdicke von 1 mm aufgetragen. Zum Härten der aufgetragenen Schicht wurde die Platte in einen Umlufttrockenschrank eingesetzt und nach dem in Beispiel 1 beschriebenen Härtezyklus ausgehärtet. Nach dem Aushärten wurde die Oberfläche der Platte mit einem Sandstrahlgebläse so lange behandelt, bis die auf die Oberfläche der Platte aufgebrachte, das Legierungspulver enthaltende, ausgehärtete Harzschicht um ca. 0,1 mm abgetragen worden war und genügend Oberflächenanteile der Körner des in die Harzschicht eingelagerten Legierungspulvers harzfrei gestrahlt worden waren. Nach dem Staubfreiblasen mit ölnebelfreier Preßluft wurde die gestrahlte Oberfläche in einer Plasmaspritzanlage mit einer Zweikoordinatentraversiereinrichtung (waagerecht, senkrecht) mit einer Aluminiumoxidschicht (Schichtstärke 500 $\mu$m) versehen. Die so erhaltene Beschichtung kann ohne weitere Bearbeitung für Abrasionsschutzzwecke eingesetzt werden.

Die bei den Beschichtungen nach den Beispielen 1, 2 und 3 erzeugten thermisch aufgespritzten Schichten wurden mit Schichten gleicher Zusammensetzung verglichen, die ohne Verwendung einer haftvermittelnden Zwischenschicht mit Beschichtungsverfahren nach dem Stand der Technik hergestellt worden waren. Die angewendeten Testmethoden bzw. Beanspruchungsarten und die erhaltenen Testergebnisse sowie Beobachtungen sind aus der tabellarischen Übersicht zu ersehen.

| Beanspruchungsart/ Testmethode | Beispiel 1 | Vergleich | Beispiel 2 | Vergleich | Beispiel 3 | Vergleich |
|---|---|---|---|---|---|---|
| Abreißtest mit aufgeklebtem Stempel | Abreißen des Klebstoffs von der Oberfläche der Beschichtung | Abreißen der Beschichtung von der Walzenoberfläche | Abreißen des Klebstoffs von der Oberfläche der Beschichtg. | einfache Trennung der Beschichtung von der Walzenoberfläche beim Abreißen | Abreißen innerhalb der Klebstoffschicht | aufgespritzte Schicht zeigt nach dem Auftragen Risse und blättert bei mechan. Beanspruchung teilweise ab. |
| Schneiden bzw. Trennen des Körpers auf Endmaß mittels diamantbesetzter Trennscheibe oder Bandsäge | Sauberer Schnitt, keine sich fortsetzend. Risse oder Abplatzung. | Sauberer Schnitt, bei 30 % der Körper von der Trennfläche im Winkel sich erstreckende Risse, bei 10 % der Körper Abplatzungen | Sauberer Schnitt, keine sich fortsetzend. Risse oder Abplatzungen | Schnitt mit leichten (bis 0,5 mm tiefen) Ausbrüchen in der Schicht. Verstärkte Rißbildung an der Trennkante (45 % der Körper), bei 30 % der Körper Abplatzungen | Sauberer Schnitt, keine sich fortsetzen den Risse oder Abplatzungen | – – |

Diesen Beobachtungen und Ergebnissen muß noch hinzugefügt werden, daß Beschichtungen, wie sie in den Beispielen 1, 2 und 3 vorgenommen wurden, jedoch ohne zuvor die haftvermittelnden Flächen der in die Kunstharzzwischenschicht eingebundenen Teilchen von Kunstharz zu befreien und zu säubern, nur Haftfestigkeiten von der Güte des Vergleichsbeispiels zu Beispiel 1 erreichen.

Die beschriebenen Ergebnisse zeigen in klarer Weise den durch die Erfindung bewirkten technischen Fortschritt.

**Patentansprüche**

1.  Verfahren zum Aufbringen eines festhaftenden, widerstandsfähigen Belages auf aus einem Verbundwerkstoff aus verstärkenden Fasern und einer Kunststoffmatrix bestehende Körper durch ein thermisches Spritzverfahren,
    bei dem,
    - in einem ersten Schritt auf die Oberfläche des zu beschichtenden Körpers eine mindestens 50 $\mu$m und höchstens 4000 $\mu$m dicke Schicht aus einer Mischung aus einem Kunstharz und einem Material in Teilchenform aufgebracht wird,
    wobei dieses Material in Teilchenform die Fähigkeit hat, sich mit dem den festhaftenden widerstandsfähigen Belag bildenden Material beim späteren thermischen Spritzprozeß fest zu verbinden,
    - nach dem Aushärten der in dem ersten Schritt aufgetragenen Schicht in einem zweiten Schritt die Oberfläche der im ersten Schritt aufgetragenen Schicht soweit und in einer Weise abgetragen wird, daß die in diese Schicht eingebundenen Teilchen in Richtung der späteren Beschichtung mit dem thermischen Spritzverfahren zeigende, freiliegende, saubere, kunstharzfreie Oberflächen haben
    - und in einem dritten Schritt das Material für die Erzeugung mindestens der ersten Schicht des festhaftenden, widerstandsfähigen Belages auf die durch den zweiten Schritt geschaffene Oberfläche mittels eines thermischen Spritzverfahrens aufgespritzt wird.

2.  Verfahren nach Patentanspruch 1,
    dadurch gekennzeichnet, daß
    die Mischung aus Kunstharz und Teilchen, die im ersten Schritt aufgetragen wird, 5 bis 60 Vol.-% Teilchen, bezogen auf die Gesamtmischung aus Kunstharz und Teilchen enthält.

3.  Verfahren nach den Patentansprüchen 1 und 2,
    dadurch gekennzeichnet, daß
    die in die Schicht aus Kunstharz eingebundenen Teilchen eine Größe von mindestens 10 $\mu$m und höchstens 1000 $\mu$m haben.

4.  Verfahren nach den Patentansprüchen 1, 2 und 3,
    dadurch gekennzeichnet, daß
    die in die Schicht aus Kunstharz eingebundenen Teilchen und das für das thermische Spritzen verwendete Material stofflich aus einem Material aus der Gruppe Nickel, Chrom, Vanadium, Mangan, Eisen, Kobalt, Titan, Silicium, Legierungen dieser Metalle, Aluminium, Aluminiumlegierungen, Kupfer, Kupferlegierungen besteht.

5.  Verfahren nach den Patentansprüchen 1, 2 und 3,
    dadurch gekennzeichnet, daß
    die in die Schicht aus Kunstharz eingebundenen Teilchen und das für das thermische Spritzen verwendete Material stofflich aus einem Material aus der Gruppe Siliciumdioxid, Aluminiumoxid, Titanoxid, Zirkonoxid, Siliciumcarbid/Silicium besteht.

6.  Verfahren nach einem der Patentansprüche 1 bis 5,
    dadurch gekennzeichnet, daß der aus einem Verbundwerkstoff bestehende Körper mit Kurzfasern verstärkt ist.

7.  Verfahren nach einem der Patentansprüche 1 bis 5,
    dadurch gekennzeichnet, daß
    der aus einem Verbundwerkstoff bestehende Körper mit Endlosfasern verstärkt ist.

8.  Verfahren nach einem der Patentansprüche 1 bis 5,
    dadurch gekennzeichnet, daß der aus einem Verbundwerkstoff bestehende Körper mit durch textile Verknüpfung von Fasern erhaltenen textilen Gebilden verstärkt ist.

9.  Verfahren nach den Patentansprüchen 1 bis 8,
    dadurch gekennzeichnet, daß

die äußere, festhaftende, widerstandsfähige Schicht durch Flammspritzen aufgebracht wird.

10. Verfahren nach den Patentansprüchen 1 bis 8,
dadurch gekennzeichnet, daß
die äußere, festhaftende, widerstandsfähige Schicht durch Plasmaspritzen aufgebracht wird.

11. Verfahren nach den Patentansprüchen 1 bis 10,
dadurch gekennzeichnet, daß
auf die erste thermisch aufgespritzte Schicht mindestens eine weitere Schicht thermisch aufgespritzt wird.

12. Verfahren nach den Patentansprüchen 1 bis 11,
dadurch gekennzeichnet, daß
auf mindestens eine der thermisch aufgespritzten Schichten eine oder mehrere Schichten galvanisch abgeschieden wird/werden.

13. Verfahren nach den Patentansprüchen 1 bis 12,
dadurch gekennzeichnet, daß
der zu beschichtende Körper eine Walze oder Rolle aus kohlenstoffaserverstärktem Kunstharz ist.

## Claims

1. Method for the application of a firmly adhering resistant coating to bodies consisting of a composite material made of reinforcing fibres and a plastics matrix by a thermal spraying process,
in which
   - an at least $50\mu m$ and at most $4000\mu m$ thick layer formed of a mixture of a synthetic resin and a material in particulate form is applied to the surface of the body to be coated in a first step, with this material in particulate form having the ability to bond with the material forming the firmly adhering resistant layer in the later thermal spraying process,
   - after the hardening of the layer applied in the first step, the surface of the layer applied in the first step is, in a second step, removed to such an extent and in such a way that the particles incorporated in this layer have clean exposed surfaces free from synthetic resin and pointing in the direction of the later coating by means of the thermal spraying process,
   - and in a third step the material for the production of at least the one layer of the firmly adhering resistant coating is sprayed on to the surface created by the second step by means of a thermal spraying process.

2. Method according to claim 1,
characterised in that the mixture of synthetic resin and particles which is applied in the first step contains 5 to 60 vol. % of particles, relating to the total mixture of synthetic resin and particles.

3. Method according to claims 1 and 2,
characterised in that the particles incorporated in the layer of synthetic resin are at least 10 $\mu m$ and at most 1,000 $\mu m$ in size.

4. Method according to claims 1, 2 and 3,
characterised in that, materially, the particles incorporated in the layer of synthetic resin and the material used for the thermal spraying consist of a material from the group comprising nickel, chromium, vanadium, manganese, iron, cobalt, titanium, silicon, alloys of these metals, aluminium, aluminium alloys, copper, copper alloys.

5. Method according to claims 1, 2 and 3,
characterised in that, materially the particles incorporated in the layer of synthetic resin and the material used for the thermal spraying consists of a material from the group comprising silicon dioxide, aluminium oxide, titanium oxide, zirconium oxide or silicon carbide/silicon.

6. Method according to one of claims 1 to 5,
characterised in that the body consisting of a composite material is reinforced with short fibres.

**7.** Method according to one of claims 1 to 5,
characterised in that the body consisting of a composite material is reinforced with filaments.

**8.** Method according to one of claims 1 to 5,
characterised in that the body consisting of a composite material is reinforced with textile structures obtained by textile linkage of fibres.

**9.** Method according to claims 1 to 8,
characterised in that the outer firmly adhering, resistant layer is applied by flame spraying.

**10.** Method according to claims 1 to 8,
characterised in that the outer firmly adhering, resistant adhesive layer is applied by plasma spraying.

**11.** Method according to claims 1 to 10,
characterised in that, at least one further layer is thermally sprayed on to the first, thermally sprayed-on layer .

**12.** Method according to claims 1 to 11,
characterised in that, one layer or several layers is/are electrolytically deposited on at least one of the thermally sprayed-on layers .

**13.** Method according to claims 1 to 12,
characterised in that the body to be coated is a cylinder or roller made of carbon fibre-reinforced synthetic resin.

**Revendications**

**1.** Procédé pour appliquer par pulvérisation au pistolet un revêtement adhérant et résistant sur une structure constituée d'un matériau composite formé de fibres de renforcement et d'une matrice en matière plastique, procédé
dans lequel,
- dans une première étape on applique sur la surface de la structure à revêtir une couche d'une épaisseur d'au moins 50 $\mu$m et d'au plus 4000 $\mu$m d'un mélange d'une résine synthétique et d'un matériau sous forme de particules, ce matériau sous forme de particules ayant la propriété de se lier fermement, lors du processus ultérieur d'application au pistolet, avec le matériau formant le revêtement adhérant et résistant,
- après le durcissement de la couche appliquée dans la première étape, la surface de cette couche est enlevée, dans une deuxième étape,de façon que les particules intégrées dans cette couche aient, en direction du revêtement ultérieur par pulvérisation au pistolet, des surfaces libres propres et exemptes de résine synthétique,
- et, dans une troisième étape, le matériau pour l'obtention d'au moins la première couche du revêtement adhérant et résistant, est projeté sur la surface créée au cours de la deuxième étape par pulvérisation au pistolet.

**2.** Procédé selon la revendication 1, caractérisé en ce que le mélange de résine synthétique et de particules qui est appliqué dans la première étape, comprend 5 à 60 % en volume de particules, rapporté au mélange total de résine synthétique et de particules.

**3.** Procédé selon les revendications 1 et 2, caractérisé en ce que les particules intégrées dans la couche en résine synthétique ont des dimensions d'au moins 10 $\mu$m et d'au plus 1000 $\mu$m.

**4.** Procédé selon les revendications 1, 2, 3, caractérisé en ce que les particules intégrées dans la couche en résine synthétique et le matériau utilisé pour l'application au pistolet sont constitués d'un matériau du groupe nickel, chrome, vanadium, manganèse, fer, cobalt, titane, silicium, d'alliages de ces métaux, d'aluminium et d'alliages d'aluminium, de cuivre et d'alliage de cuivre.

**5.** Procédé selon les revendications 1, 2 et 3, caractérisé en ce que les particules intégrées dans la couche en résine synthétique et le matériau utilisé pour l'application au pistolet, sont en un matériau du groupe dioxyde de silicium, oxyde d'aluminium, oxyde de titane, oxyde de zirconium, carbure de silicium/silicium.

6. Procédé selon l'une des revendications 1 à 5, caractérisé en ce que la structure constituée d'un matériau composite est renforcée par des fibres courtes.

7. Procédé selon l'une des revendications 1 à 5, caractérisé en ce que la structure constituée d'un matériau composite est renforcée par des fibres sans fin.

8. Procédé selon l'une des revendications 1 à 5, caractérisé en ce que la structure constituée d'un matériau composite est renforcée par des structures textiles obtenues par combinaison textile de fibre.

9. Procédé selon les revendications 1 à 8, caractérisé en ce que la couche externe adhérente et résistante est appliquée par projection à la flamme.

10. Procédé selon les revendications 1 à 8, caractérisé en ce que la couche externe adhérente et résistante est appliquée par projection au plasma.

11. Procédé selon les revendications 1 à 10, caractérisé en ce que sur la première couche appliquée au pistolet, est appliquée au pistolet au moins une autre cou-che.

12. Procédé selon les revendications 1 à 11, caractérisé en ce que sur au moins l'une des couches appliquées au pistolet, une ou plusieurs couches est ou sont déposées galvaniquement.

13. Procédé selon les revendications 1 à 12, caractérisé en ce que la structure à revêtir est un cylindre ou un rouleau en résine synthétique renforcée par des fibres de carbone.